# EUROPEAN PATENT SPECIFICATION

(11) **EP 0 493 464 B1**
(45) Date of publication and mention of the grant of the patent: **12.04.1995**
(21) Application number: 90914229.1
(22) Date of filing: 28.09.1990
(51) Int. Cl.: G05D 13/62

(54) **DRIVE SYSTEMS FOR TRANSPORTATION MECHANISMS**
ANTRIEBSSYSTEM FÜR TRANSPORTMECHANISMUS
SYSTEMES D'ENTRAINEMENT POUR MECANISMES TRANSPORTEURS

(30) Priority: 29.09.1989 GB 8921987
(43) Date of publication of application: 08.07.1992
(73) Proprietor: WESTERN ATLAS U.K. LIMITED, Aylesbury, Buckinghamshire HP20 2RQ (GB)
(72) Inventor: CLEWS, John, Colin, West Midlands DY3 3BD (GB)
(74) Representative: Nash, Keith Wilfrid
(86) International application number: GB9001488
(87) International publication number: WO9105299

(56) References cited:
- EP-A- 0 135 754
- IBM TDB vol. 22, no. 8A, January 1980, US page 3052 G.P. OLSON: "TABLE SPLITTING FOR STEPPER MOTOR CONTROL" see the whole document
- ELEKTRONIK. vol. 34, no. 19, September 1985, MUNCHEN DE pages 83 - 89; P.F. ORLOWSKI ET AL: "FAHRKURVENRECHNER MIT EINPLATINEN-COMPUTER" see the whole document
- PATENT ABSTRACTS OF JAPAN vol. 11, no. 129 (P-570)(2576) 23 April 1987, & JP-A-61 271501 (KOBE STEEL LTD) 01 December 1986, see the whole document

## Description

### Field of the invention

This invention relates to the control of drive systems for transportation mechanisms typified by but not confined to industrial shuttle beam transfer devices, and more particularly to a method of and apparatus for controlling the speed of an electric motor so that a body driven by the motor is moved in accordance with a pre-determined law of motion.

### Background to the invention

In the transportation of an object from one position to another as typified by but not confined to industrial shuttle type transfer systems, second order effects of acceleration and deceleration are applied to the object and the transportation mechanism, the amplitudes of which are dependent on the law of motion employed. If the motion law involves abrupt changes in the rate of acceleration or deceleration, shock forces of considerable magnitude are liable to be applied to the object being transported and the transportation mechanism, with the consequent possibility of damage to the object and the mechanism.

It is known that these second order effects are minimal when the law of motion employed is that of a cycloid curve, with the velocity changing continuously over the full movement distance in accordance with the general equation y=c cosx + c between the limits x=180 and x=540 degrees. With this law of motion, the rate of change of acceleration follows thee equation y=sin x between the limits specified, with no abrupt changes to apply shock forces to the object being transported or the mechanism involved.

This known effect has hitherto been exploited by a method wherein a controlled change of velocity is imparted to a transportation mechanism by a mechanical arrangement of gears and levers driven by an electric or other force motor which may be started and stopped at the limits of travel, but which runs at substantially constant speed throughout the period of movement.

This means of producing cycloidal acceleration and deceleration has the desirable characteristic of providing accurate control of the initial and final position of the object being transported, but has the disadvantage of high equipment cost and requires the driving motor to overcome the friction and inertial effects of the gearing mechanism in addition to providing sufficient force for the acceleration of the transportation mechanism and the object being moved.

The known effect has also been exploited by means of second order closed loop servo mechanisms in which the transportation system is constrained to follow a predetermined velocity profile by monitoring the position occupied by or volocity of the mechanism at discrete intervals of time or distance, and applying a corrective signal or force when the actual position or velocity at any point diverges from the theoretical value determined for that point.

Such systems are complex and require integration of velocity and positional data with response lags determined by gain limits and stability constraints, and require the use of costly servo motors to provide the force necessary to drive the transportation system.

Further known means of exploiting the advantages of cycloidal velocity control employ electronic or other methods to directly control the speed of an electric or other force motor to produce cycloidal acceleration and deceleration by continuous or stepwise adjustment of the velocity control parameter over a pre-determined period of time.

Such means may share with this invention the advantages of simplicity and low equipment cost but they are unable to provide and maintain the postional accuracy obtainable with the invention disclosed herein without frequent adjustment to correct errors caused by variation in the operting performance or characteristics of the components contained in the control mechanism.

It is therefore an object of this invention to provide a simple reliable and low cost means of controlling the velocity imparted to a transportation mechanism by an electric or other force motor to produce velocity changes in accordance with a pre-determined law of motion and regulated during the deceleration phase by the motion imparted to the transportation mechanism in such a way as determine the position at which zero velocity occurs.

### The invention

According to one aspect of the invention, there is provided a method of producing a drive in accordance with a predetermined law of motion such as a cycloidal law for a body linearly driven by an electric motor, according to which, during deceleration of the motor to a stopped condition, a speed-determining parameter of the energising current supplied to the motor is incremented to reduce the motor speed in accordance with the predetermined law and in dependence on a sequence of digital valves read out from a memory device, the reading out of the digital values is sequenced by an encoding device itself driven responsively to rotation of the motor shaft, the encoding device being preset to match the reading out of the final digital value to the position of the driven body at which the motor is to be stopped, and when the digital value representing zero velocity is read out the motor comes to rest and a brake is applied.

According to another apsect of the invention, there is provided apparatus for producing a drive in accordance with a predetermined law of motion such as cycloidal law for a body linearly driven by an electric motor, comprising a memory device having stored therein a sequence of pre-selected digital values, an encoding device producing a sequence of output signals responsively to rotation of the motor shaft, means whereby the encoder output signals are utilised to read out the digital values stored in the memory device, a signal converting device whereby the read-out digital values are utilised to increment a speed-determining parameter of the energizing current to the motor so that the motor speed is reduced towards the stopped condition in accordance with the predetermined law, the encoding device being preset to match the reading-out of the digital value representing zero velocity to the position of the driven body at which the motor is to be stopped.

A brake may be provided for instantaneously stopping the motor when the last digital value representing zero velocity is read out, thereby to prevent any possible uncontrolled movement.

It is known that a suitable electric motor whose speed is controllable by a parameter (amplitude or frequency) of the energising current supplied to the motor coils, can be caused to produce a drive at its output shaft which follows a required law of acceleration and deceleration.

However, the present invention provides, in particular, a solution to the problem of stopping the motor of the driven body, eg the locating table, at an exact given position, which is a prime requirement in many situations.

Although reference is made above to use of the invention in driving a shuttle beam transfer device, the present invention is not limited to this application. The invention may be used, for example, to stop a moving, electrically driven vehicle in order to avoid a damaging impact. In this case, the encoding device will initiate the deceleration phase of motion responsively to the operation of a detector which senses when the vehicle passes a point which is a predetermined distance from the position at which an impact would occur, stopping the vehicle exactly at the end of the predetermined distance in accordance with a predetermined preferably cycloidal law of deceleration.

When the invention is employed to control a repetitive back and forth motion, such as a shuttle beam transfer device, deceleration in both directions of movement will be controlled in the aforesaid manner. Conveniently, the acceleration phase will also be controlled by reading out digital values from the memory device, eg an EPROM, but the control will preferably be an open loop technique rather than the closed loop technique used during the deceleration phase. Thus, an encoding device is generally not required for the acceleration phase, as the exact position at which the acceleration phase is completed is generally not important. On the contrary, means may be provided for adjusting the interval at which the digital values are read out during the acceleration phase, so that the overall time span of this phase is likewise adjustable.

The acceleration and deceleration phases may or may not be immediately successive.

While microprocessor control is possible, this is not preferred. Thus, in a preferred arrangement, the memory device is an EPROM having say 8K bits, the first 4K of which are employed to store digital values for producing acceleration in accordance with a predetermined preferably cycloidal law (180 to 360 degrees) and the second 4K of which are employed to store digital values for producing deceleration in accordance with the same law (360 to 540 degrees). A pair of counters, for example 12 bit counters, are employed to read the digital values respectively during the acceleration and decelaration phases. The acceleration phase counter causes the first 4K bits to be read during a time span set by an adjustable voltage generator the output of which is fed to a voltage to frequency converter providing the trigger for the counter. The deceleration phase counter is triggered by the encoding device driven by the output shaft of the electric motor. One or more devices such as limit switches reset the counters on completion of the reading out of each set of digital values.

The signals read out from the EPROM are preferably fed to a digital to analogue converter and thence via an amplifier to an inverter which provides the energising current controlling the motor speed. The deceleration phase is controlled over an exact number of revolutions of the motor shaft corresponding to the number of EPROM addresses employed to reduce the velocity parameter down to zero and the number of addresses incremented by the encoding device in each revolution of the shaft. The zero velocity value output from the EPROM can be accompanied by a flag at the zero velocity address to cause the motor to be disconnected and a mechanical or electrically actuated brake applied to prevent further uncontrolled movement of the driven mechanism. The resetting of the counters, coupled with reversal of two phases of the motor supply, enables motion of the driven body in the opposite direction (reverse rotation of the motor) to be controller in an exactly analogous manner.

The invention will now be described by way of example with reference to the accompanying drawings, in which:-
Figure 1 illustrates graphically a cycloidal velocity and acceleration characteristics; and

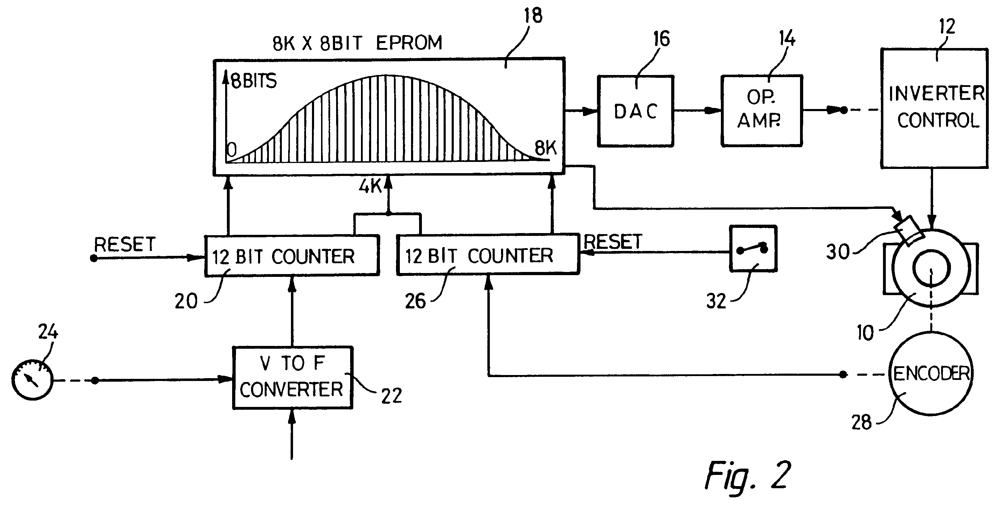

Figure 2 illustrates a control system in accordance with the invention for controlling an electric motor in accordance with a cycloidal law.

### Detailed description of the drawings

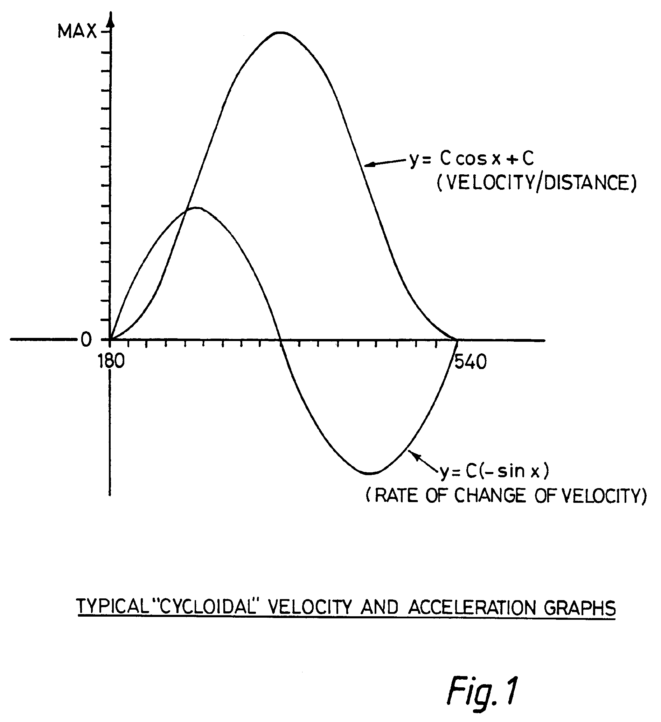

Figure 1 needs little comment. The graph shows the velocity curve (in full) and the acceleration curve (dotted) for a cycloidal motion.

In practice, the output shaft of the motor may drive a spur gear engaging a rack associated with a workpiece locating table which is to be repetitively driven back and forth to enable a manufacturing or assembly operation to be performed on each of a succession of workpieces.

Referring to the drawing, an a.c. geared brake motor 10, is controlled by the energising current supplied by an inverter control circuit 12 which is supplied via an operational amplifier 14 with the output signals of a digital to analogue converter 16 receiving the digital values read out from an 8K x 8 (8192 bit) EPROM 18.

Addresses 1 to 4096 in the EPROM hold digital values for producing acceleration in accordance with a predetermined law of motion such as a cycloidal law, and addresses 4097 to 8192 hold digital values for producing deceleration in accordance with the same predetermined law.

Acceleration of the body is produced by an open loop technique. A twelve bit counter 20 triggered by a voltage to frequency converter 22, fed from an adjustable voltage generator 24, causes the reading-out of the first set of digital values (1 to 4096) during a time span set at the voltage generator. The motor is thus accelerated from zero to maximum speed.

The count may be held at address 4096 so that the motor then maintains a constant speed until a signal received from an external source (a detector triggered by movement of the locating table or other driven body) initiates the deceleration phase.

Deceleration is produced in accordance with a closed loop technique, in order to stop the motor after a predetermined number of revolutions of its output shaft, and thus stop the driven body at a predetermined required position, eg where a manufacturing or assembly operation is to be performed.

Thus, a twelve bit counter 26 causes the reading out of the second set of digital values (4097 to 8192) as it is stopped or by output signals obtained from an encoder 28 driven by the motor shaft. If, for example, a total travel of 2 metres is required during the deceleration phase to stop the driven body at a given position, and one revolution of the motor output shaft produces 1/2 mm of travel, then the encoder is pre-arranged to produce an output signal each time slightly less than one revolution of the motor shaft has been completed (4000/4192 of a revolution).

At address 8192 the byte value is zero, and a flag at this address disconnects the motor 10 and applies a brake 30.

A limit switch 32 resets the system ready for reverse rotation of the motor with two phases of the supply reversed, both counters receiving a reset signal.

It is to be noted that, although not apparent from the simplified block diagram shown in the drawing, acceleration is open loop and deceleration is closed loop during reverse rotation of the motor, in exactly analogous manner to the method described for the motion in the first direction.

## Claims

1. A method of producing a drive in accordance with a predetermined law of motion, such as a cycloidal law, for a body linearly driven by an electric motor (10), whereby during deceleration of the motor (10) to a stopped condition a speed-determining parameter of the energising current supplied to the motor is incremented to reduce the motor speed in accordance with the predetermined law and in dependence on a sequence of digital values read out from a memory device (18), the reading out of the digital values is sequenced by an encoding device (28) itself driven responsively to rotation of the motor shaft, the encoding device (28) being preset to match the reading out of the final digital value to the position of the driven body at which the motor is to be stopped, and when the digital value representing zero velocity is read out the motor comes to rest and a brake (30) is applied.

2. A method according to claim 1, in which the said parameter of the motor energising current is the amplitude or frequency thereof.

3. A method according to claim 1, or claim 2, applied to driving a shuttle beam transfer device.

4. A method according to claim 1 or claim 2, applied to stop a moving, electrically driven vehicle in order to avoid a damaging impact, the encoding device initiating the declaration phase of motion responsively to the operation of a detector which senses when the vehicle passes a point which is a predetermined distance from the position at which an iinpact would occur.

5. A method according to claim 1 or claim 2, for controlling a repetitive back and forth motion, in which decelaration in both directions of movement is controlled in the same manner.

6. A method according to claim 5, in which the accelaration phase is also controlled by reading out digital values from the memory device, but without use of an encoding device.

7. A method according to claim 6, in which the interval at which the digital values are read out during the accelaration phase is adjustable, so that the overall time span of this phase is likewise adjustable.

8. A method according to claim 7, in which the accelaration and declaration phases are not immediately successive.

9. Apparatus for producing a drive in accordance with a predetermined law of motion, such as cycloidal law, for a body linearly driven by an electric motor (10), comprising a memory device (18) having stored therein a sequence of pre-selected digital values, an encoding device (28) producing a sequence of output signals responsively to rotation of the motor shaft, means (20, 22, 26) whereby the encoder output signals are utilised to read out the digital values stored in the memory device (18), a signal converting device (16) whereby the read-out digital values are utilised to increment a speed-determining parameter of the energising current to the motor (10) so that the motor speed is reduced towards the stopped condition in accordance with the predetermined law, the encoding device (28) being preset to match the reading-out of the digital value representing zero velocity to the position of the driven body at which the motor is to be stopped.

10. Apparatus according to claim 9, having a brake for instantaneously stopping the motor when the last digital value representing zero velocity is read out, thereby to prevent any possible uncontrolled movement.

11. Apparatus according to claim 9 or claim 10, in which the memory device is an EPROM having a capacity of N bits, the first N/2 of which are employed to store digital values for producing acceleration in accordance with a predetermined cycloidal law (180 to 360 degrees) and the second N/2 of which are employed to store digital values for producing deceleration in accordance with the same law (360 to 540 degrees).

12. Apparatus according to claim 11, in which a pair of counters are employed to read the digital values respectively during the accelaration and decelaration phases, the acceleration phase counter causing the first N/2 bits to be read during a time span set be an adjustable voltage generator the output of which is fed to a voltage to frequency converter providing the trigger for the counter, and the deceleration phase counter being triggered by the encoding device driven by the output shaft of the electric motor, means being proceeded for reseting the counters on completion of the reading out of each set of digital values.

13. Apparatus according to claim 12, in which the signals read out from the memory device are fed to a digital analogue converter and thence via an amplifier to an inverter which provides the energising current controlling the motor speed, the declaration phase being controlled over an exact number of revolutions of the motor shaft corresponding to the number of memory addresses employed to reduce the velocity parameter down to zero.

14. Apparatus according to claim 13, in which the zero velocity value output from the memory device is accompanied by a flag at the zero velocity address to cause the motor to be disconnected and a mechanical or electrically actuated brake to be applied to prevent further uncontrolled movement of the driven mechanism.

## Patentansprüche

1. Verfahren zum Erzielen eines Antriebs nach einer vorgegebenen Bewegungsgesetzmäßigkeit, z.B. einem Zykloidengesetz, für einen Körper, der von einem Elektromotor (10) linear angetrieben wird, bei dem während einer Verzögerung des Motors (10) auf einen angehaltenen Zustand ein die Drehzahl bestimmender Parameter des dem Motor zugeführten Speisestromes schrittweise so vergrößert wird, daß die Motordrehzahl nach der vorgegebenen Gesetzmäßigkeit und in Abhängigkeit von einer Folge von aus einer Speichervorrichtung (18) ausgelesenen digitalen Werten reduziert wird, das Auslesen der digitalen Werte durch eine Codiervorrichtung (28) in die richtige Reihenfolge gebracht wird, die selbst abhängig von der Drehung der Motorwelle angetrieben wird, die Codiervorrichtung (28) so voreingestellt wird, daß das Auslesen des digitalen Endwertes an die Position des angetriebenen Körpers angepaßt wird, bei der der Motor angehalten werden soll, und dann, wenn der digitale, die Nullgeschwindigkeit darstellende Wert ausgelesen wird, der Motor stillgesetzt und eine Bremse (30) eingelegt wird.

2. Verfahren nach Anspruch 1, dadurch gekennzeichnet, daß der Parameter des Motorspeisestromes dessen Amplitude oder Frequenz ist.

3. Verfahren nach Anspruch 1 oder 2 zum Antrieb einer Pendelträger-Übertragungsvorrichtung.

4. Verfahren nach Anspruch 1 oder 2, zum Anhalten eines sich bewegenden, elektrisch angetriebenen Fahrzeuges, um einen schädlichen Aufprall zu vermeiden, wobei die Codiervorrichtung, die die Verzögerungsphase der Bewegung in Abhängigkeit vom Betrieb eines Detektors einleitet, der feststellt, wann das Fahrzeug einen Punkt passiert, der einen vorbestimmten Abstand von der Position hat, bei der ein Aufprall stattfinden würde.

5. Verfahren nach Anspruch 1 oder 2, zur Steuerung einer repetierenden Rückwärts- und Vorwärtsbewegung, bei der eine Verzögerung in beiden Bewegungsrichtungen in gleicher Weise gesteuert wird.

6. Verfahren nach Anspruch 5, bei dem die Beschleunigungsphase auch dadurch gesteuert wird, daß digitale Werte aus der Speichervorrichtung ausgelesen werden, jedoch ohne eine Codiervorrichtung zu verwenden.

7. Verfahren nach Anspruch 6, bei dem das Intervall, bei dem die digitalen Werte während der Beschleunigungsphase ausgelesen werden, einstellbar ist, derart, daß die Gesamtzeitspanne dieser Phase ebenfalls einstellbar ist.

8. Verfahren nach Anspruch 7, bei dem die Beschleunigungs- und Verzögerungsphasen nicht unmittelbar aufeinanderfolgen.

9. Einrichtung zum Erzielen eines Antriebs nach einer vorbestimmten Bewegungsgesetzmäßigkeit, z.B. einem Zykloidengesetz, für einen durch einen Elektromotor (10) linear angetriebenen Körper, mit einer Speichervorrichtung (18), in der eine Folge von vorgewählten digitalen Werten gespeichert ist, einer Codiervorrichtung (28), die eine Folge von Ausgangssignalen in Abhängigkeit von der Drehung der Motorwelle erzeugt, einer Vorrichtung (20, 22, 26), durch die die Codiererausgangssignale verwendet werden, um die in der Speichervorrichtung (18) gespeicherten digitalen Werte auszulesen, und einer Signalumwandlungsvorrichtung (16), durch die die ausgelesenen digitalen Werte verwendet werden, um einen die Drehzahl bestimmenden Parameter des Speisestromes zum Motor (10) schrittweise so zu vergrößern, daß die Motordrehzahl auf den angehaltenen Zustand in Übereinstimmung mit der vorgegebenen Gesetzmäßigkeit reduziert wird, wobei die Codiervorrichtung (28) so voreingestellt wird, daß das Auslesen des digitalen die Nullgeschwindigkeit darstellenden Wertes an die Position des angetriebenen Körpers, bei der der Motor angehalten werden soll, angepaßt wird.

10. Vorrichtung nach Anspruch 9, mit einer Bremse zum sofortigen Anhalten des Motors, wenn der letzte digitale, die Nullgeschwindigkeit darstellende Wert ausgelesen wird, wodurch eine mögliche unkontrollierte Bewegung verhindert wird.

11. Vorrichtung nach Anspruch 9 oder 10, bei der die Speichervorrichtung ein EPROM mit einer Kapazität von N Bits ist, wobei die ersten N/2 Bits verwendet weren, um digitale Werte zur Erzielung einer Beschleunigung in Abhängigkeit von einer vorgegebenen zykloidalen Gesetzmäßigkeit (180 - 360°) zu erzielen, und die zweiten N/2 Bits verwendet werden, um digitale Werte zur Erzielung einer Verzögerung in Abhängigkeit von der gleichen Gesetzmäßigkeit (360 - 540°) zu speichern.

12. Vorrichtung nach Anspruch 11, bei der ein Paar von Zählern verwendet wird, um jeweils die digitalen Werte während der Beschleunigungs- und Verzögerungsphasen auszulesen, wobei der Beschleunigungsphasenzähler bewirkt, daß die ersten N/2 Bits während einer Zeitspanne ausgelesen werden, die durch einen einstellbaren Spannungsgenerator festgelegt wird, dessen Ausgang einem Spannungs-Frequenz-Wandler zugeführt wird, der die Auslösung für den Zähler ergibt, und der Verzögerungsphasenzähler durch die Codiervorrichtung gesteuert wird, die von der Abgabewelle des Elektromotors angetrieben wird, und eine Vorrichtung zum Rücksetzen der Zähler bei Beendigung des Auslesens eines jeden Satzes von digitalen Werten vorgesehen ist.

13. Vorrichtung nach Anspruch 12, bei der die aus der Speichervorrichtung ausgelesenen Signale einem Digital-Analog-Wandler und von dort über einen Verstärker einem Inverter aufgegeben werden, der den die Motordrehzahl steuernden Speisestrom erzeugt, wobei die Verzögerungsphase über eine exakte Anzahl von Umdrehungen der Motorwelle entsprechend der Anzahl von Speicheradressen, die zum Verringern des Geschwindigkeitsparameters bis auf Null verwendet werden, gesteuert wird.

14. Vorrichtung nach Anspruch 13, bei der dem Nullgeschwindigkeitswert, der aus der Speichervorrichtung abgegeben wird, ein Kennzeichen bzw. Flag an der Nullgeschwindigkeitsadresse beigegeben ist, das bewirkt, daß der Motor abgeschaltet und eine mechanische oder elektrisch betätigte Bremse eingelegt wird, um eine weitere unkontrollierte Bewegung des angetriebenen Mechanismus zu verhindern.

## Revendications

1. Procédé consistant à produire un entraînement conformément à une loi de mouvement prédéterminée telle qu'une loi cycloïdale pour un corps entraîné linéairement par un moteur électrique (10), selon lequel, pendant une décélération du moteur (10) vers un état arrêté, un paramètre déterminant la vitesse constitué du courant d'excitation envoyé vers le moteur est incrémenté pour réduire la vitesse du moteur conformément à la loi prédéterminée et en fonction d'une séquence de valeurs numériques extraites d'un dispositif (18) à mémoire, l'extraction des valeurs numériques étant séquencée par un dispositif de codage (28) entraîné lui-même en réponse à la rotation de l'arbre moteur, le dispositif de codage (28) étant préétabli pour faire correspondre l'extraction de la valeur numérique finale à la position du corps entraîné où le moteur doit être arrêté, et pour que, lorsque la valeur numérique représentant la vitesse zéro est extraite, le moteur passe à l'arrêt, un frein étant mis en oeuvre.

2. Procédé selon la revendication 1, dans lequel ledit paramètre du courant d'excitation moteur est l'amplitude ou la fréquence de celui-ci.

3. Procédé selon la revendication 1 ou 2, appliqué à l'entraînement d'un dispositif de transfert à navette.

4. Procédé selon la revendication 1 ou 2 appliqué à l'arrêt d'un véhicule en mouvement, entraîné électriquement, afin d'éviter un impact dommageable, le dispositif de codage initialisant la phase de décélération du mouvement en réponse à la mise en action d'un détecteur qui repère le moment où le véhicule passe devant un point qui est à une distance prédéterminée à partir de la position où un impact apparaîtrait.

5. Procédé selon la revendication 1 ou 2, destiné à commander un mouvement répétitif en va et vient, dans lequel la décélération est commandée de la même manière dans les deux directions de déplacement.

6. Procédé selon la revendication 5, dans lequel la phase d'accélération est aussi commandée par extraction de valeurs numériques du dispositif à mémoire, mais sans utilisation d'un dispositif de codage.

7. Procédé selon la revendication 6, dans lequel l'intervalle au cours duquel les valeurs numériques sont extraites pendant la phase d'accélération peut être réglé, de sorte que la période de temps globale de cette phase puisse être réglée de manière analogue.

8. Procédé selon la revendication 7, dans lequel la phase d'accélération et la phase de décélération ne se suivent pas de manière immédiate.

9. Appareil destiné à produire un entraînement correspondant à une loi de mouvement prédéterminée, telle qu'une loi cycloïdale, pour un corps entraîné linéairement par un moteur électrique (10), comportant un dispositif (18) à mémoire dans lequel est mémorisée une séquence de valeurs numériques présélectionnées, un dispositif de codage (28) produisant une séquence de signaux de sortie en réponse à la rotation de l'arbre moteur, des moyens (20, 22, 26) par lesquels les signaux de sortie du dispositif de codage sont utilisés pour extraire les valeurs numériques mémorisées dans le dispositif (18) à mémoire, un dispositif (16) de conversion de signal par lequel les valeurs numériques extraites sont utilisées pour incrémenter un paramètre de détermination de la vitesse, constitué du courant d'excitation du moteur (10) de sorte que la vitesse moteur soit réduite vers l'état arrêté conformément à la loi prédéterminée, le dispositif (28) de codage étant pré-établi pour faire correspondre l'extraction de la valeur numérique représentant la vitesse zéro à la position du corps entraîné pour laquelle le moteur doit être arrêté.

10. Appareil selon la revendication 9, comportant un frein destiné à arrêter de manière instantanée le moteur lorsque la dernière valeur numérique représentant la vitesse zéro est extraite, afin d'empêcher ainsi tout mouvement non commandé possible.

11. Appareil selon la revendication 9 ou 10, dans lequel le dispositif formant mémoire est une EPROM ayant une capacité de N bits, dont les premiers N/2 bits sont utilisés pour mémoriser des valeurs numériques, destinées à produire une accélération conformément à une loi cycloïdale prédéterminée (180 à 360°) et dont les seconds N/2 bits sont utilisés pour mémorisés des valeurs numériques, destinées à produire une décélération conformément à cette même loi (360 à 540°).

12. Appareil selon la revendication 11, dans lequel deux compteurs sont utilisés pour lire les valeurs numériques respectivement pendant la phase d'accélération et pendant la phase de décélération, le compteur de phase d'accélération entraînant les premiers N/2 bits à être lus pendant une période de temps établie par un générateur de tension réglable, dont la sortie est envoyée sous forme de tension vers un convertisseur de fréquences assurant le déclenchement du compteur, et le compteur de phase de décélération étant déclenché par le dispositif de codage entraîné par l'arbre de sortie du moteur électrique, des moyens étant prévus pour remettre à zéro les compteurs lors de la fin de l'extraction de chaque jeu de valeurs numériques.

13. Appareil selon les revendications 12, dans lequel les signaux extraits provenant du dispositif à mémoire sont envoyés vers un convertisseur numérique-analogique et par conséquent via un amplificateur vers un inverseur qui fournit le courant d'excitation commandant la vitesse du moteur, la phase de décélération étant commandée sur un nombre exact de tours de l'arbre moteur correspondant au nombre d'adresses mémoire utilisées pour réduire le paramètre de vitesse à zéro.

14. Appareil selon la revendication 13, dans lequel la sortie de valeur de vitesse nulle provenant du dispositif à mémoire est accompagnée d'un drapeau à l'adresse de vitesse nulle pour entraîner le moteur à être déconnecté, un frein actionné de manière mécanique ou électrique étant appliqué pour empêcher tout autre mouvement non commandé du mécanisme entraîné.
